# EUROPEAN PATENT SPECIFICATION

(11) **EP 1 707 475 B1**
(45) Date of publication and mention of the grant of the patent: **18.05.2011**
(21) Application number: 06004165.4
(22) Date of filing: 01.03.2006
(51) Int. Cl.: B62D 25/08, B60R 16/04

(54) **Engine room having a structure for arrangement of engine-associated vehicle components**
Motorraum mit einer Struktur zur Anordnung von motorzugehörigen Fahrzeugkomponenten
Compartiment moteur avec une structure pour l'agencement de composants de vehicule associés au moteur

(30) Priority: 31.03.2005 JP 2005100523; 31.03.2005 JP 2005100524; 31.03.2005 JP 2005100525
(43) Date of publication of application: 04.10.2006
(73) Proprietor: Mazda Motor Corporation, Aki-gun, Hiroshima, (JP)
(72) Inventor: Ohe, Haruo,, Aki-gun, Hiroshima, (JP); Iwasaka, Kouji, Aki-gun, Hiroshima, (JP); Nakamura, Yukio, Aki-gun, Hiroshima, (JP)
(74) Representative: Zinnecker, Armin

(56) References cited:
- EP-A- 1 495 896
- JP-A- 6 344 946
- JP-A- 7 228 161

## Description

### BACKGROUND OF THE INVENTION

### 1. Field of the Invention

The present invention relates to an engine room having a structure for arrangement of engine-associated components, such as a battery constituting a power supply system of a vehicle.

### 2. Description of the Related Art

There exist conventionally known structures for arrangement of engine-associated vehicle components.

For example, Japanese Unexamined Patent Publication No. 1995-228161 describes a structure in which a plurality of cooling fans are arranged in crosswise layers on a rear side of a radiator which is disposed in a forward inclining position at a location corresponding to an external air inlet opening at the front of a vehicle, an engine body is disposed at the back of the cooling fans, and a plurality of engine-associated components, such as an air cleaner and a battery, are mounted one behind another in a space between the cooling fans and the engine body, whereby a cooling air passage for guiding cooling air which has passed through the cooling fans toward the engine body is formed by walls of the plurality of engine-associated components.

If the plurality of engine-associated components, such as the air cleaner and the battery, are arranged along a longitudinal direction of the vehicle body between the cooling fans and the engine body as described in Japanese Unexamined Patent Publication No. 1995-228161, it would be possible to effectively cool the engine body by guiding the cooling air which has passed through the cooling fans to a site where the engine body is mounted in an efficient manner. However, the battery used as a power supply unit of the vehicle has a specific size and weight, so that there can arise a problem with respect to engine room layout if the battery is installed at the front of the engine body.

Furthermore, there is still a room for improvement in an air intake performance with an intake air passage for supplying intake air introduced through a fresh air inlet (conduit) provided at the front of the vehicle to the engine body.

EP 1 495 896 A discloses an engine room having a structure for arrangement of engine-associated components according to the preamble part of claim 1.

JP 6344946 A discloses a front part structure of a vehicle in which a battery is arranged over the left and right wheel houses in an engine room.

### SUMMARY OF THE INVENTION

In light of the aforementioned problems and the room for improvement in the prior art, it is an object of the invention to provide an engine room having a simple structure for arrangement of engine-associated components of a vehicle capable of providing effectively improved driving stability and air intake performance by using properly designed layout of the engine-associated components.

This object is achieved by the features of claim 1. According to the invention, an engine room including at least two batteries having a main battery and a secondary battery which together constitute a power supply system of a vehicle is such that a fresh air conduit is laid at a forward part of the engine room, an engine body is installed at a rear part of the engine room and fresh air drawn in through the fresh air conduit is supplied to the engine body through an intake air passage, wherein at least one of the main battery and the secondary battery is disposed on one side of engine body.

In this engine room, the engine body is installed at the rear part of the engine room and the main battery and the secondary battery are disposed on one side of the engine body so that it is possible to linearly arrange the intake air passage over a sufficient overall length and thereby improve air intake performance in an efficient manner through effective use of an effect of intake air inertia. Further, as the two batteries can be mounted at the back of the engine room, there can be created an advantage that it is possible to provide a sufficient crush space which is critical in the event of a collision at the forward part of the engine room and thereby improve the safety of vehicle occupants, for instance.

These and other objects, features and advantages of the invention will become more apparent upon reading the following detailed description along with the accompanying drawings.

### BRIEF DESCRIPTION OF THE DRAWINGS

FIG. 1 is a side view showing an engine room having a structure for arrangement of engine-associated vehicle components according to a preferred embodiment of the invention;
FIG. 2 is a plan view showing the engine room having a structure for arrangement of the engine-associated vehicle components according to the preferred embodiment of the invention;
FIG. 3 is a perspective view showing how a main battery and a secondary battery are disposed;
FIG. 4 is a perspective view showing an alternative secondary battery employed in a modified form of the preferred embodiment of FIG. 1;
FIG. 5 is a plan view showing the engine room having a structure for arrangement of the engine-associated vehicle components according to the modified form of the preferred embodiment of FIG. 1;

### DETAILED DESCRIPTION OF THE PREFERRED EMBODIMENTS OF THE INVENTION

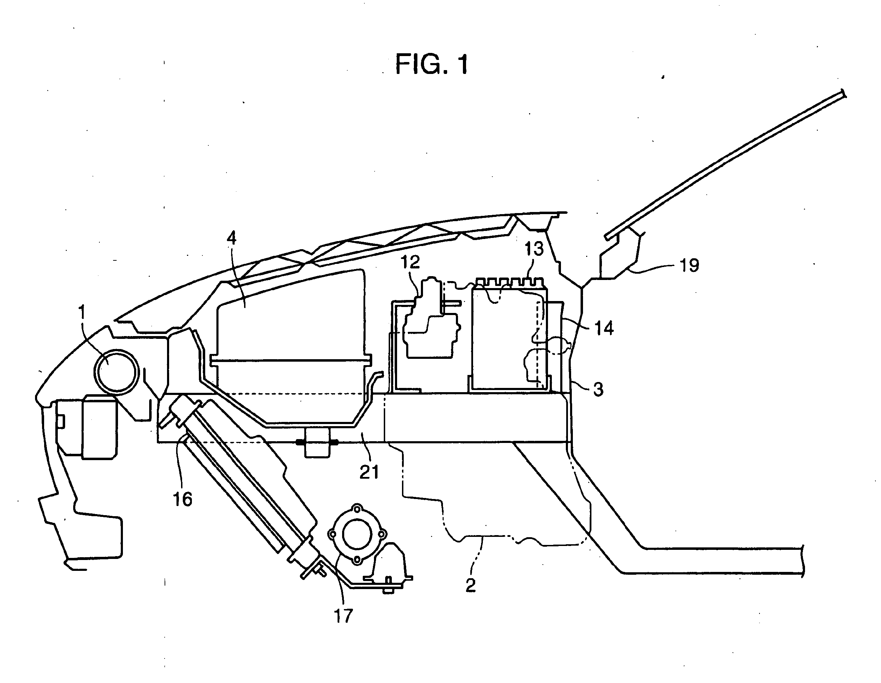

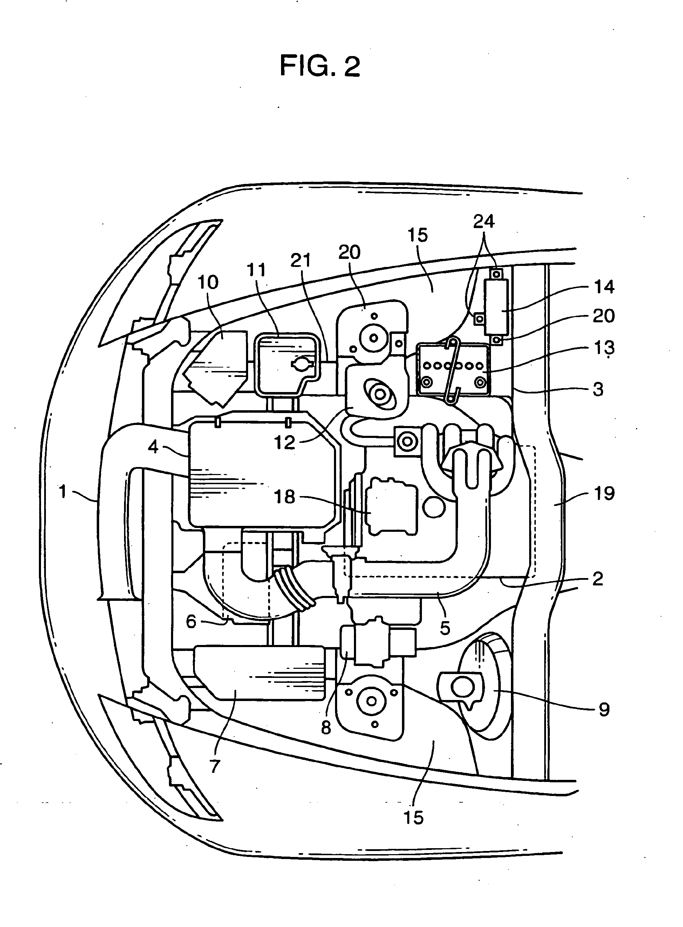

FIGS. 1 and 2 are diagrams showing an engine room having a structure for arrangement of engine-associated components provided in the engine room of a vehicle according to a preferred embodiment of the invention. As illustrated in these figures, the engine room accommodates from front to back a fresh air duct 1 serving as a fresh air conduit located at a forward part of the engine room, an air cleaner 4, and an engine body 2 which is a rotary engine located between the air cleaner 4 and a dash panel 3. These components are arranged such that fresh air drawn in through the fresh air duct 1 while the vehicle is running is supplied to the engine body 2 through the air cleaner 4 and an intake air passage 5.

As shown in FIG. 2, there are provided a control unit 6 for a power train and a main fuse box 7 on one side of the air cleaner 4, a hydraulic valve unit 8 for an antilock braking system (ABS) at the rear of the main fuse box 7 on one side of the engine body 2 and a vacuum brake booster (or a so-called master vac) 9 for the braking system mounted on the dash panel 3 traversely extending at the rear of the hydraulic valve unit 8 generally along a left side of the engine room.

On the other hand, there are provided a control unit 10 for a power steering system and a sub-tank 11 on one side of the air cleaner 4 and an air pump 12 for the rotary engine at the rear of the sub-tank 11 generally along a right side of the engine room. Further at the rear of the air pump 12, there are provided a wheel house 15 for a right front wheel on one side of the engine body 2 as well as a main battery 13 and a secondary battery 14 which together constitute a power supply system of the vehicle between the wheel house 15 and a right portion of the dash panel 3.

The main battery 13 is a lead storage battery utilizing a chemical reaction which is widely used as an automotive power supply device. Thus, the main battery 13 is relatively large-sized and has a high changing capacity. In contrast, the secondary battery 14 is a capacitor, such as an electric double-layer capacitor (EDLC), used as an auxiliary power supply device. The secondary battery 14 is small-sized and has a low changing capacity compared to the main battery 13.

Referring to FIG. 1, designated by the reference numeral 16 is a radiator which is disposed in a forward inclining position at a location corresponding to an external air inlet opening at the front of the vehicle, and designated by the reference numeral 17 is a traversely extending steering rack which is disposed at the front of the engine body 2. Referring to FIG. 2, designated by the reference numeral 18 is an alternator which is disposed above the engine body 2, and designated by the reference numeral 19 is a cowling which is disposed above the dash panel 3.

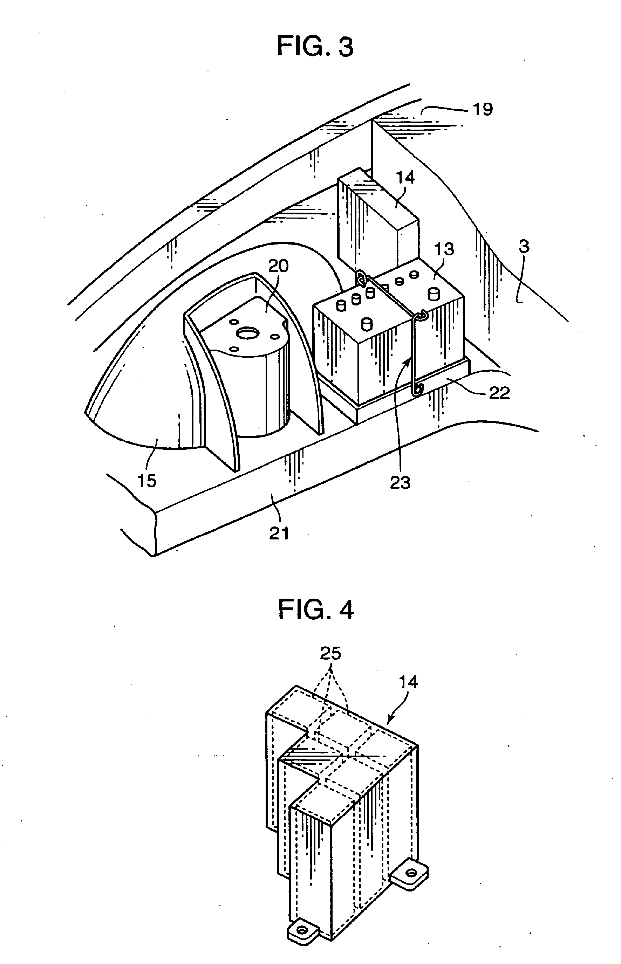

Referring to FIG. 3, the aforementioned main battery 13 is disposed at the rear of a suspension tower 20 erected along a side surface of the right front wheel house 15 and fixed to a battery tray 22 by a battery clamp 23 on the top of a front side frame 21, so that the main battery 13 is mounted along a longitudinal direction of a body of the vehicle in a space bounded by the engine body 2 and the wheel house 15 on left and right sides and by the suspension tower 20 and the dash panel 3 on front and rear sides.

On the other hand, the secondary battery 14 is mounted along a traverse direction of the vehicle body on the outside of the main battery 13 in a space bounded by a rear end of the right front wheel house 15 and the dash panel 3. The secondary battery 14 is bolted to a vehicle body member including the front side frame 21 at fixing flanges 24 extended leftward, frontward and rightward from a bottom end of a battery case as illustrated in FIG. 2.

According to the present embodiment, the vehicle is constructed such that the fresh air duct 1 serving as the fresh air conduit is mounted at the forward part of the engine room, the engine body 2 is installed at a rear part of the engine room, and fresh air drawn in through the fresh air conduit is supplied to the engine body 2 through the intake air passage 5. The engine room accommodates the main battery 13 and the secondary battery 14 which together constitute the power supply system of the vehicle with the main battery 13 disposed on one side of the engine body 2 and the secondary battery 14 disposed on one side of the main battery 13. With the main battery 13 and the secondary battery 14 constituting part of the engine-associated components properly laid out in this fashion, it is possible to effectively improve driving stability and air intake performance with a simple structure.

If the power supply system of the vehicle is configured by the main battery 13 and the secondary battery 14 as discussed above, it is possible to reduce the capacities of the individual batteries 13, 14 compared to a case where the entirety of electric power for operating the engine and onboard equipment is supplied from a single battery. This confers an advantage that the main battery 13 can be disposed in a space bounded by the wheel house 15 for the right front wheel located at one side of the engine room and the traversely extending dash panel 3 mounted at a rear end of the engine room and the secondary battery 14 can be properly disposed in a narrow space formed on the outside of the main battery 13 between the rear end of the right front wheel house 15 and a front side of the dash panel 3.

Also, since the engine body 2 is disposed in a rear portion of the engine room at a position close to the dash panel 3 and the main battery 13 and the secondary battery 14 are mounted on one side of the engine body 2, it is possible - to linearly arrange the intake air passage 5 over a sufficient overall length and thereby improve the air intake performance in an efficient manner through effective use of an effect of intake air inertia. Further, as the two batteries 13, 14 are mounted at the back of the engine room, it is possible to provide a sufficient crush space which is critical in the event of a collision at the forward part of the engine room and thereby improve the safety of vehicle occupants. Moreover, both the main battery 13 and the secondary battery 14 can be reduced in weight. This is advantageous in that it is possible to effectively prevent an increase in yaw moment of inertia in maneuvering even when the two batteries 13, 14 are mounted at one side of the engine room.

Especially because the main battery 13 is mounted between the wheel house 15 for the right front wheel located at one side of the engine room and the dash panel 3 mounted at the rear end of the engine room in the foregoing embodiment, there is created an advantage that it is possible to effectively protect an area where the main battery 13 is mounted from an impact load caused by a head-on collision of the vehicle, for instance, and support the main battery 13 in a stable fashion. More specifically, since the right front wheel house 15 is effectively reinforced as the suspension tower 20 having a high degree of stiffness is affixed to the wheel house 15, for instance, it is possible to effectively protect the area where the main battery 13 is mounted from an impact load caused by a head-on collision of the vehicle, for instance, even if an area at the front of the suspension tower 20 is used as part of the crush space. Therefore, it is possible to effectively prevent the occurrence of such a situation that the main battery 13 comes off the battery tray 22 and suffers damage due to an impact load, potentially causing secondary damage to other engine room components.

Also, since the secondary battery 14 is mounted between the wheel house 15 for the right front wheel located at one side of the engine room and the dash panel 3 mounted at the rear end of the engine room in the foregoing embodiment, it is possible to effectively protect an area where the secondary battery 14 is mounted from an impact load caused by a head-on collision of the vehicle, for instance, and support the secondary battery 14 in a stable fashion. Additionally, as the two batteries 13, 14 are arranged close to each other with the secondary battery 14 mounted on one side of the main battery 13, there is created an advantage that it is possible to prevent wirings from the two batteries 13, 14 from becoming too long and simplify wiring work in a case where it is necessary to provide electric power from the two batteries 13, 14 to common onboard components.

While the invention has been described by way of example, with reference to the preferred embodiment employing the main battery 13 which is a lead storage battery having a high changing capacity utilizing a chemical reaction and the secondary battery 14 which is a capacitor, such as an electric double-layer capacitor, having a low changing capacity used as an auxiliary power supply device, the invention is not limited to this structure but may be modified in various ways. For example, the engine room of the foregoing embodiment may be modified such that the power supply system of the vehicle includes the main battery 13 which is a lead storage battery and the secondary battery 14 which is a lead storage battery smaller than the main battery 13, the secondary battery 14 being mounted between the wheel house 15 for the right front wheel located at one side of the engine room and the dash panel 3 mounted at the rear end of the engine room.

Alternatively, the secondary battery 14 may be a lithium ion battery which is a secondary battery which accumulates and releases electrical charge through exchange of lithium ions between a positive electrode and a negative electrode. Although the lithium ion battery is expensive, it has such advantages as superior durability and high energy density (i.e., the amount of electric energy that the battery can retain per unit weight), so that the power supply system can be made compact and property laid out with each in a limited space of the engine room.

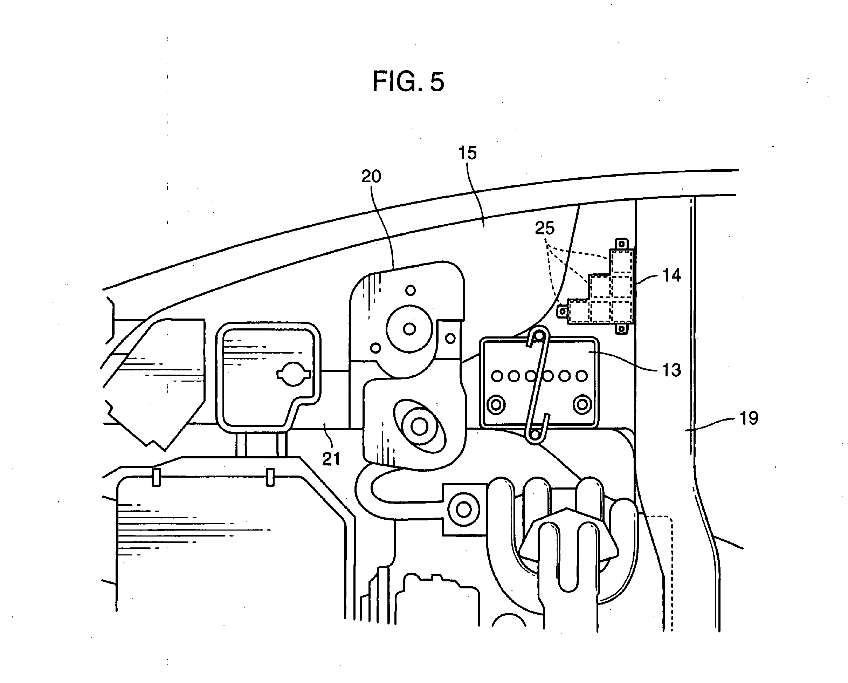

In addition, since the lithium ion battery is made of a plurality of series-connected unit cells 25, the secondary battery 14 can be arranged such that a larger number of unit cells 25 are disposed on a side facing the center line of the vehicle body and a smaller number of unit cells 25 are disposed on the opposite side as illustrated in FIGS. 4 and 5. This arrangement confers an advantage that the lithium ion battery constituting the secondary battery 14 can be disposed in an efficient manner by effectively using the narrow space formed between the rear end of the right front wheel house 15 and the dash panel 3.

In summary, according to a principal form of the invention, an engine room having a structure for arrangement of engine-associated components including at least two batteries having a main battery and a secondary battery which together constitute a power supply system of a vehicle is such that a fresh air conduit is laid at a forward part of an engine room, an engine body is installed at a rear part of the engine room and fresh air drawn in through the fresh air conduit is supplied to the engine body through an intake air passage, wherein at least one of the main battery and the secondary battery is disposed on one side of engine body.

A feature of the invention, is that the main battery is disposed on one side of the engine body and the secondary battery is disposed on one side of the main battery.

In this engine room, the engine body is installed at the rear part of the engine room and the main battery and the secondary battery are disposed on one side of the engine body so that it is possible to linearly arrange the intake air passage over a sufficient overall length and thereby improve air intake performance in an efficient manner through effective use of an effect of intake air inertia. Further, as the two batteries are mounted at the back of the engine room, there is created an advantage that it is possible to provide a sufficient crush space which is critical in the event of a collision at the forward part of the engine room and thereby improve the safety of vehicle occupants, for instance.

A further feature of the invention, is that the main battery is disposed between a wheel house for one of front wheels located at one side of the engine room and a traversely extending dash panel mounted at a rear end of the engine room.

In this engine room, the main battery is disposed between the wheel house for one of the front wheels located at one side of the engine room and the dash panel mounted at the rear end of the engine room, so that there is created an advantage that it is possible to effectively protect an area where the main battery is mounted from an impact load caused by a head-on collision of the vehicle, for instance, and support the main battery in a stable fashion.

In a preferred feature of the invention, the structure for arrangement of the engine-associated components of the aforementioned first principal form is such that the secondary battery is disposed between a wheel house for one of front wheels located at one side of the engine room and a traversely extending dash panel mounted at a rear end of the engine room.

In this structure, the secondary battery is disposed between the wheel house for one of the front wheels located at one side of the engine room and the dash panel mounted at the rear end of the engine room, so that it is possible to effectively protect an area where the secondary battery is mounted from an impact load caused by a head-on collision of the vehicle, for example, and support the secondary battery in a stable fashion. Additionally, as the two batteries are arranged close to each other with the secondary battery mounted on one side of the main battery, there is created an advantage that it is possible to prevent wirings from the two batteries from becoming too long and simplify wiring work in a case where it is necessary to provide electric power from the two batteries to common onboard components.

## Claims

1. An engine room having a structure for arrangement of components provided in the engine room and including at least two batteries; a main battery (13) and a secondary battery (14), which together constitute a power supply system of a vehicle in which a fresh air conduit (1) is laid at a forward part of the engine room, an engine body (2) is installed at a rear part of the engine room and fresh air drawn in through the fresh air conduit (1) is supplied to the engine body (2) through an intake air passage (5), wherein at least said main battery (13) and said secondary battery (14) are disposed on one side of the engine body (2), wherein said main battery (13) is disposed between a wheel house (15) for one of front wheels located at one side of the engine room and a traversely extending dash panel (3) mounted at a rear end of the engine room.
**characterized in that**
said main battery (13) is disposed on one side of the engine body (2) and the secondary battery (14) is disposed on one side of said main battery (13).

2. The engine room according to claim 1, wherein said secondary battery (14) is disposed between a wheel house (15) for one of front wheels located at one side of the engine room and a traversely extending dash panel (3) mounted at a rear end of the engine room.

3. The engine room according claim 1, wherein the secondary battery (14) is disposed in a narrow space formed on the outside of the main battery (13) between the rear end of the wheel house (15) and a front side of the dash panel (3).

4. The engine room according to any one of claims 1 to 3, wherein the main battery (13) is a lead storage battery utilizing a chemical reaction and the secondary battery (14) is a capacitor used as an auxiliary power supply device, and wherein the secondary battery (14) is smaller in size and has a low changing capacity compared to the main battery (13).

## Patentansprüche

1. Motorraum mit einer Struktur für die Anordnung von Komponenten, die im Motorraum vorgesehen sind und mindestens zwei Batterien; eine Hauptbatterie (13) und eine sekundäre Batterie (14) umfassen, die zusammen ein Stromversorgungssystem eines Fahrzeugs bilden, in dem eine Frischluftleitung (1) an einem vorderen Teil des Motorraums verlegt ist, ein Motorkörper (2) an einem hinteren Teil des Motorraums eingebaut ist und durch die Frischluftleitung (1) gesaugte Frischluft dem Motorkörper (2) durch einen Ansaugluftkanal (5) zugeführt wird, wobei mindestens die Hauptbatterie (13) und die sekundäre Batterie (14) an einer Seite des Motorköpers (2) angeordnet sind, wobei die Hauptbatterie (13) zwischen einem Radkasten (15) für eines von Vorderrädern, der an einer Seite des Motorraums positioniert ist, und einer sich quer erstreckenden Instrumententafel (3), die an einem hinteren Ende des Motorraums befestigt ist, angeordnet sind,
**dadurch gekennzeichnet, dass**
die Hauptbatterie (13) an einer Seite des Motorkörpers (2) angeordnet ist und die sekundäre Batterie (14) an einer Seite der Hauptbatterie (13) angeordnet ist.

2. Motorraum nach Anspruch 1, **dadurch gekennzeichnet, dass** die sekundäre Batterie (14) zwischen einem Radkasten (15) für eines von Vorderrädern, der sich an einer Seite des Motorraums befindet, und einer sich quer erstreckenden Instrumententafel (3), die an einem hinteren Ende des Motorraums befestigt ist, angeordnet ist.

3. Motorraum nach Anspruch 1, **dadurch gekennzeichnet, dass** die sekundäre Batterie (14) in einem engen Raum angeordnet ist, der an der Außenseite der Hauptbatterie (13) zwischen dem hinteren Ende des Radkastens (15) und einer Vorderseite der Instrumententafel (3) ausgebildet ist.

4. Motorraum nach einem der Ansprüche 1 bis 3, **dadurch gekennzeichnet, dass** die Hauptbatterie (13) ein eine chemische Reaktion nutzender Bleiakkumulator ist und die sekundäre Batterie (14) ein Kondensator ist, der als Hilfsstromversorgungsvorrichtung verwendet wird, und dass die sekundäre Batterie (14) verglichen mit der Hauptbatterie (13) von kleinerer Größe ist und eine niedrige Änderungskapazität hat.

## Revendications

1. Compartiment moteur possédant une structure destinée à l'arrangement de composants présents dans le compartiment moteur et comprenant au moins deux batteries ; une batterie principale (13) et une batterie secondaire (14), qui constituent ensemble un système d'alimentation électrique d'un véhicule dans lequel un conduit d'air frais (1) est placé sur une partie avant du compartiment moteur, un carter moteur (2) est installé sur une partie arrière du compartiment moteur et de l'air frais étiré à travers lequel le conduit d'air frais (1) est raccordé au carter moteur (2) à travers un passage d'air d'aspiration (5), dans lequel au moins ladite batterie principale (13) et ladite batterie secondaire (14) sont disposées sur un seul côté du carter moteur (2), dans lequel ladite batterie principale (13) est disposée entre un passage de roue (15) pour l'une des roues avant située sur un seul côté du compartiment moteur et une tôle d'amortissement s'étendant de manière transversale (3) montée sur une extrémité arrière du compartiment moteur,
**caractérisé en ce que**
ladite batterie principale (13) est disposée sur un côté du carter moteur (2) et la batterie secondaire (14) est disposée sur un côté de ladite batterie principale (13).

2. Compartiment moteur selon la revendication 1, dans lequel ladite batterie secondaire (14) est disposée entre un passage de roue (15) pour l'une des roues avant située sur un seul côté du compartiment moteur et une tôle d'amortissement s'étendant de manière transversale (3) montée sur une extrémité arrière du compartiment moteur.

3. Compartiment moteur selon la revendication 1, dans lequel la batterie secondaire (14) est disposée dans un espace contigu formé sur la partie extérieure de la batterie principale (13) entre l'extrémité arrière du passage de roue (15) et une partie avant de la tôle d'amortissement (3).

4. Compartiment moteur selon une quelconque des revendications 1 à 3, dans lequel la batterie principale (13) est une batterie à accumulateur au plomb utilisant une réaction chimique et la batterie secondaire (14) et un condensateur utilisé comme un dispositif d'alimentation électrique auxiliaire, et dans lequel la batterie secondaire (14) est de taille plus petite et possède une basse capacité d'ondulation en comparaison avec la batterie principale (13).
